Europäisches Patentamt

European Patent Office

Office européen des brevets

(19)

(11) Veröffentlichungsnummer : **0 445 593 B1**

(12)
# EUROPÄISCHE PATENTSCHRIFT

(45) Veröffentlichungstag der Patentschrift :
**27.04.94 Patentblatt 94/17**

(51) Int. Cl.$^5$ : **C01B 25/32**

(21) Anmeldenummer : **91102530.2**

(22) Anmeldetag : **21.02.91**

(54) Verfahren zum Herstellen von granuliertem Dicalciumphosphatdihydrat.

(30) Priorität : **03.03.90 DE 4006734**

(43) Veröffentlichungstag der Anmeldung :
**11.09.91 Patentblatt 91/37**

(45) Bekanntmachung des Hinweises auf die
Patenterteilung :
**27.04.94 Patentblatt 94/17**

(84) Benannte Vertragsstaaten :
**AT BE CH DE DK ES FR GB GR IT LI LU NL SE**

(56) Entgegenhaltungen :
**EP-A- 0 054 333**
**DE-B- 1 817 127**
**US-A- 3 467 495**
**US-A- 4 675 188**

(73) Patentinhaber : **BK LADENBURG GmbH,**
**Gesellschaft für chemische Erzeugnisse**
**Dr.-Albert-Reimann-Strasse 2**
**D-68526 Ladenburg (DE)**

(72) Erfinder : **Rau, Karl-Martin, Dr.**
**Gottlob-Schneider-Strasse 39**
**W-7504 Ettlingen (DE)**
Erfinder : **Merkenich, Karl, Dr.**
**Am Rimbacher Weg 13**
**W-6149 Fürth/Fahrenbach (DE)**
Erfinder : **Stoffel, Erwin**
**Heine-Strasse 8**
**W-6941 Laudenbach (DE)**

(74) Vertreter : **Grussdorf, Jürgen, Dr. et al**
**Patentanwälte Zellentin & Partner**
**Rubensstrasse 30**
**D-67061 Ludwigshafen (DE)**

## Beschreibung

Gegenstand der vorliegenden Erfindung ist ein Verfahren zum Herstellen von granuliertem Dicalciumphosphatdihydrat aus feinkörnigem, pulverigem Dicalciumphosphatdihydrat.

Dicalciumphosphat wird technisch in großem Umfang als Zusatz zu Zahnpasten und als Trägermaterial in pharmazeutischen Tabletten verwendet. Für beide Zwecke werden Körner bzw. Granulate einer Korngröße von ca. 100 - 500 $\mu$m gebraucht, da sie in Misch- und Abfüllanlagen problemlos gehandhabt werden, d.h. "freifließend" sind und wenig stauben. Bei der Herstellung durch Umsetzen von Calciumcarbonat in wässriger Suspension mit wässriger Phosphorsäure entsteht jedoch vorwiegend ein relativ feinkörniges Produkt, dessen Korngrößen überwiegend im Bereich von 1 - 50 $\mu$m liegen.

Aufgabe der vorliegenden Erfindung war es, solche feinkörnigen Dicalciumphosphate in eine für die technische Weiterverarbeitung geeignete Granulatform zu überführen, ohne dabei Granulierhilfsmittel zu verwenden, die bei der Weiterverarbeitung stören.

Aus der DE-A-25 12 099 ist es bekannt, hochkonzentrierte Suspensionen von Calciumcarbonat und Phosphorsäure in einen Röhrenreaktor bei Temperaturen von etwa 90° C zu vermischen und durch das entstehende Kohlendioxid die Mischung zu feinen Tröpfchen zu zerteilen, welche einen Reaktor durchfallen, in dem sie zum Dicalciumphosphat durchreagieren und sich genügend verfestigen, so daß die gebildeten Granulate gesammelt und getrocknet werden können. Solche Granulate haben aufgrund der Herstellung unter Bildung von großen Mengen $CO_2$ eine geringe Schüttdichte und Festigkeit, so daß sie für die Weiterverarbeitung nur bedingt geeignet sind.

Aus dem norwegischen Patent 100 875 ist weiterhin bekannt, daß bei Reaktion von Calciumcarbonat mit Phosphorsäure in einer Knetapparatur die in feuchtem Zustand agglomerierten Produkte bei der weiteren Verarbeitung und Trocknung wieder zu einem fließfähigen Pulver zerfallen. Ein entsprechender Vorschlag in der DE-B-25 12 099 die lockeren Produkte durch Granulierapparaturen weiter zu kompaktieren, erweist sich daher als spekulativ.

Aus der DE-C-1817127 ist ferner bekannt, feinkörnige Phosphate durch Zugabe von wässriger Natronlauge und sauren Calciumdihydrogenphosphaten zu granulieren. Das durch die Umsetzung entstehende Natriumphosphat wirkt offensichtlich als Bindemittel, welches die Calciumphosphatkörner zusammenhält. Solche Produkte sind zwar als "mineralische Tierfuttermittel" geeignet, nicht jedoch für die pharmazeutische Industrie, in der der Natriumphosphatbestandteil stören würde.

In der EP-A-0 054 333 ist weiterhin ein Verfahren beschrieben, granulierte Calciumphosphate, u.a. auch Dicalciumphosphatdihydrat, einer Korngröße von 75 - 450 $\mu$m dadurch herzustellen, daß man Feinpartikel einer Größe von 1 - 75 $\mu$m unter hohem Druck zu dünnen Platten verpreßt, welche anschließend zu einem Granulat geeigneter Größe gebrochen oder gemahlen werden können. Das trocken verpreßte Material ist einerseits nicht sehr fest und weist andererseits einen hohen Staubanteil und aufgrund des Brechens bzw. Mahlens eine sehr kantige Form auf, welche für die weitere Verarbeitung wenig geeignet ist.

Aus der US-A- 34 67 495 ist ein Verfahren bekannt, granulierte Calciumphosphate, u.a. auch Dicalciumphosphat, dadurch herzustellen, daß man die Reaktion von Phosphorsäure mit Calciumcarbonat oder Calciumhydroxid in einem Kneter durchführt, und die 2,5 - 10 fache Menge eines feinteiligen Calciumphosphats als Kristalisationskeime und Reaktionsbett vorlegt. Granulat der erforderlichen Größe wird offensichtlich nur in geringer Ausbeute erhalten, da der überwiegende Anteil als Feinkorn bzw. wiederaufzumahlendes Überkorn in den Prozeß zurückgeführt werden muß und entsprechend nur ein geringer Anteil brauchbares Granulat entsteht.

Überraschenderweise läßt sich unter den in den Patentansprüchen näher gekennzeichneten Verfahrensbedingungen in hoher Ausbeute und völlig ohne störende Bindemittelanteile ein Granulat erhalten, welches für die Weiterverarbeitung hervorragend geeignet ist. Das so hergestellte Granulat weist eine relativ hohe Schüttdichte und Festigkeit auf. Die einzelnen Granulatkörner sind im wesentlichen rund und daher in Transport- und Verarbeitungsanlagen sehr gut schütt- und fließfähig.

Gemäß dem erfindungsgemäßen Verfahren wird das bei der Herstellung von grobkristallinem Dicalciumphosphat anfallende Feinkorn, welches bisher als Abfallprodukt angesehen wurde, in einer Menge von 80 - 95 Gew.% mit 5-20 Gew.-% pulverförmigem Calciumhydroxid, welches gegebenenfalls bis zu 50% Calciumcarbonat enthalten kann, trocken vermischt und zu einer Wirbelschicht aufgewirbelt. In diese Wirbelschicht wird dann wässrige Phosphorsäure in einer Menge von 20 - 50 Gew.-%, bei einem Phosphorsäuregehalt, das zur Neutralisation des Calciumhydroxids ausreicht (z.B. 30-60%), Kontinuerlich eingesprüht, wodurch sich die Pulverteilchen zu Agglomeraten zusammenlagern und Phosphorsäure und Calciumhydroxid zu Calciumphosphat reagieren und die Agglomerate verfestigen. Der Wasserüberschuß wird anschließend bei 150 - 200° C getrocknet, und, soweit erforderlich, geringe Anteile an Fein- und Überkorn abgesiebt.

Bei Verwendung von Ausgangsprodukten mit Raumtemperatur stellt sich durch die Reaktionswärme eine Reaktionstemperatur von 30 -80° C ein, vorzugsweise wird bei Temperaturen von 50 - 75° C gearbeitet. Höhere Temperaturen scheinen weniger günstig zu sein, da die für die primäre Zusammenführung des Feinkorns notwendigen Wassertröpfchen dann zu rasch verdampft, zu niedrige Temperaturen dürften ungünstig sein, da die Granulatkörner zu langsam aushärten.

Als Calciumverbindung wird Calciumhydroxid bevorzugt. Bis zu einem gewissen Grad kann Calciumhydroxid jedoch auch durch Calciumoxid oder Calciumcarbonat ersetzt werden, wobei insbesondere bei Calciumcarbonat das bei der Reaktion mit Phosphorsäure entstehende Kohlendioxid den Zusammenhalt der Granulate negativ beeinflußt und daher einen gewissen Prozentsatz nicht übersteigen sollte. Der in handelsüblichem Calciumhydroxid enthaltene Anteil von Calciumcarbonat, welcher bis zu 50 % ausmachen kann, stört jedoch die Reaktion nicht.

Die eingesetzten Pulver von Dicalciumphosphat und Calciumhydroxid haben eine Korngröße von unter 120 μm, vorzugsweise werden Pulver mit einer mittleren Korngröße von 5-50 μm eingesetzt, wie sie bei der Produktion direkt anfallen. Rückgeführtes Feinkorn aus der Produktion, welches Korngrößen bis zu 120 μm aufweisen kann, wird entweder direkt eingesetzt oder teilweise vermahlen, um ein homogenes Ausgangsmaterial einzusetzen.

Das erfindungsgemäß Verfahren läßt sich besonders gut mit einer Mischapparatur wie der von der Firma Schugi hergestellten "Flexomix"-Apparatur durchführen.

Dieser Mischer besteht aus einem vertikalen Zylinder mit einer schnelldrehenden Welle (1.000-3.000 U/min), auf der unterschiedliche und im Anstellwinkel verstellbare Mischwerkzeuge (Messer) montiert sind.

Pulver und Flüssigkeiten werden an der Oberseite des Zylinders eindosiert. Durch die hohe Luftturbulenz werden die Komponenten fluidisiert und vermischt. Die Verweilzeit der Produkte im Mischer/Agglomerator ist etwa eine Sekunde. Der Mischraum ist nur etwa 10 % mit Produkt gefüllt, d.h. daß bei einem Durchsatz von z.B. 1 Tonne/Stunde sich nur etwa 300 g Produkt im Mischraum befindet.

Eine Selbstreinigungsvorrichtung ist vorgesehen, wo Produktverklebungen auftreten können. Dazu wird ein bewegender Rollenkäfig um eine flexible Zylinderwand angeordnet. Durch ständige Bewegung des Rollenkäfigs wird die Wand verformt, wodurch Verklebungen abgestoßen werden.

In den folgenden Beispielen ist das erfindungsgemäße Verfahren in einigen Varianten näher beschrieben.

Allgemeine Verfahrensführung

Dicalciumphosphatdihydrat einer Schüttdichte von 615 g/l mit einer durchschnittlichen Korngröße von unter 120 μm, vorzugsweise 5 bis 50 μm, wird mit einem technischen Calciumhydroxidpulver entsprechender Korngröße, welches ca. 50 % Calciumcarbonat enthält, vermischt und in einem Schugi "Flexomix" oder ein entsprechendes Wirbelschichtgerät kontinuierlich eingegeben. Wässrige Phosphorsäure wird in den angegebenen Mengen eingesprüht.

Beispiel 1:

| Messerstellung: | +2 |
|---|---|
| Material: | 50 kg DCP + 5 kg Ca(OH)$_2$, Trockenmischung |
| Zugesetzte Flüssigkeit: | 54 %-ige Phosphorsäure |
| Aufgabemenge Feststoff: | 480 kg/h |
| Aufgabemenge Flüssigkeit: | 3,3 kg/min |
| Schüttdichte: | 700 g/ltr |
| Kornverteilung: | |

```
     mm        kum. %
- - - - - - - - - - - - - -
    1,4          2,4
    1,0          8,5
    0,71        20,8
    0,50        37,8
    0,25        79,0
    0,125       96,4
```

pH-Wert 20 %-iger slurry: 3
Molverhältnis H$_3$PO$_4$ : Ca(OH)$_2$ = 1,87 : 1

EP 0 445 593 B1

Ergebnis: Gutes Granulat. Die Materialtemperatur betrug am Ausgang des Flexomix 50° C und erwärmte sich noch auf 68° C (Neutralisationswärme), auch bei den Beispielen 2, 3, 4.

Beispiel 2:

Messerstellung: +2
Material: 50 kg DCP + 10 kg $Ca(OH)_2$, Trockenmischung
Zugesetzte Flüssigkeit: 54 %-ige Phosphorsäure
Aufgabemenge Feststoff: 480 kg/h
Aufgabemenge Flüssigkeit: 3,3 kg/min
Schüttdichte: 680 g/ltr
Kornverteilung:

```
      mm          kum.  %
- - - - - - - - - - - - - -
     1,4           4,0
     1,0          12,3
     0,71         24,8
     0,50         38,2
     0,25         77,9
     0,125        93,3
```

pH-Wert 20 %-iger slurry: 4
Molverhältnis $H_3PO_4 : Ca(OH)_2 = 1,02 : 1$
Ergebnis: Gutes Granulat.

Beispiel 3:

Messerstellung: +2
Material: 50 kg DCP + 15 kg $Ca(OH)_2$, Trockenmischung
Zugesetzte Flüssigkeit: 54 %-ige Phosphorsäure
Aufgabemenge Feststoff: 480 kg/h
Aufgabemenge Flüssigkeit: 3,3 kg/min
Schüttdichte: 665 g/ltr
Kornverteilung:

```
      mm          kum.  %
- - - - - - - - - - - - - -
     1,4           3,3
     1,0          11,5
     0,71         20,9
     0,50         33,8
     0,25         64,3
     0,125        81,7
```

pH-Wert 20 %-iger slurry: 6,5
Molverhältnis $H_3PO_4 : Ca(OH)_2 = 0,74 : 1$
Ergebnis: Feineres Granulat, Staubanteil relativ hoch.

Beispiel 4:

Messerstellung: +2
Material: 50 kg DCP + 15 kg $Ca(OH)_2$, Trockenmischung
Zugesetzte Flüssigkeit: 54 %-ige Phosphorsäure + Wasser
Aufgabemenge Feststoff: 480 kg/h
Aufgabemenge Flüssigkeit: 3,32 kg/min 54 %-ige P-säure
                          1,4 kg/min Wasser

4

Schüttdichte: 681 g/ltr
Kornverteilung:

```
       mm          kum.  %
       - - - - - - - - - - - - - - -
       1,4          0,8
       1,0          0,9
       0,71         4,4
       0,50         8,9
       0,25        40,4
       0,125       76,1
```

pH-Wert 20 %-iger slurry: 7
Molverhältnis $H_3PO_4$ : $Ca(OH)_2$ = 0,74 : 1
Ergebnis: Sehr hoher Staubanteil, schlechtes Granulat.

Beispiel 5 (Vergleich):

Messerstellung:             +2
Material:                   50 kg DCP
Zugesetzte Flüssigkeit:     Wasser
Aufgabemenge Feststoff:     480 kg/h
Aufgabemenge Flüssigkeit:   3,3 kg/min
Schüttdichte:               635 g/ltr
Ergebnis: Keine Granulation, Kornverteilung ähnlich dem Ausgangsprodukt.

**Patentansprüche**

1. Verfahren zum Herstellen von granulierten Dicalciumphosphatdihydrat aus feinkörnigem, pulverigem Dicalciumphosphatdihydrat, **dadurch gekennzeichnet,** daß man
   80 - 95 %       Dicalciumphosphatdihydrat einer Korngröße von unter 120 μm und
   20 - 5 %        Calciumhydroxid einer Korngröße von unter 120 μm
   trocken vermischt und in einer Wirbelschicht mit, bezogen auf die Feststoffmenge, 20 - 50 % Wasser, in dem eine zur Neutralisation des Calciumhydroxids ausreichende Menge Phosphorsäure enthalten ist, kontinuierlich besprüht und granuliert, das erhaltene Granulat bei 150 - 200° C trocknet und gegebenenfalls Grob- und Feinkornanteile absiebt.

2. Verfahren nach Anspruch 1, **dadurch gekennzeichnet,** daß die Granulierung bei einer Temperatur von 40 - 75° C durchgeführt wird.

3. Verfahren nach den Ansprüchen 1 oder 2, **dadurch gekennzeichnet,** daß bis zu 50 % des Calciumhydroxids durch Calciumcarbonat ersetzt wird.

4. Verfahren nach einem der Ansprüche 1 bis 3, **dadurch gekennzeichnet,** daß die Korngröße der Ausgangsprodukte im Mittel 5-50 μm beträgt.

5. Verfahren nach einem der Ansprüche 1-4, **dadurch gekennzeichnet,** daß die Granulate zu über 90 % eine Korngröße von über 120 μm besitzen.

**Claims**

1. Process for the production of granulated dicalcium phosphate dihydrate from fine-grained, powdered dicalcium phosphate dihydrate, characterised in that one dry mixes
   80 - 95%        dicalcium phosphate dihydrate of a grain size of below 120 μm and
   20 - 5%         of calcium hydroxide of a grain size of below 120 μm

5

and continuously sprays and granulates in a fluidised bed with, referred to the amount of solid, 20 - 50% of water in which is contained an amount of phosphoric acid sufficient for the neutralisation of the calcium hydroxide, dries the granulate obtained at 150 - 200°C and possibly sieves off coarse and fine grain portions.

2. Process according to claim 1, characterised in that the granulation is carried out at a temperature of 40 - 75°C.

3. Process according to claims 1 or 2, characterised in that up to 50% of the calcium hydroxide is replaced by calcium carbonate.

4. Process according to one of claims 1 to 3, characterised in that the grain size of the starting product amounts, on average, to 5 - 50 $\mu$m.

5. Process according to one of claims 1 - 4, characterised in that the granulate possesses to more than 90% a grain size of above 120 $\mu$m.


**Revendications**

1. Procédé de préparation de dihydrate de phosphate dicalcique granulé à partir de dihydrate de phosphate dicalcique pulvérulent, à grains fins, caractérisé en ce qu'on mélange à sec
80 - 95 % de dihydrate de phosphate dicalcique présentant une dimension granulaire inférieure à 120 $\mu$m et
20 - 5 % d'hydroxyde de calcium présentant une dimension granulaire inférieure à 120 $\mu$m, et en ce qu'on les arrose de manière continue, dans une couche de tourbillonnement, de 20-50 % d'eau, par rapport à la quantité de matière solide, dans laquelle est contenue une quantité d'acide phosphorique suffisante pour la neutralisation de l'hydroxyde de calcium, et on les granule, on sèche le produit de granulation obtenu à 150-200°C et éventuellement on élimine par tamisage les fractions de grains grossiers et de grains fins.

2. Procédé suivant la revendication 1, caractérisé en ce que la granulation est effectuée à une température de 40-75°C.

3. Procédé suivant l'une des revendications 1 et 2, caractérisé en ce que jusqu'à 50 % de l'hydroxyde de calcium sont remplacés par du carbonate de calcium.

4. Procédé suivant l'une des revendications 1 à 3, caractérisé en ce que la dimension granulaire des produits de départ est en moyenne de 5-50 $\mu$m.

5. Procédé suivant l'une des revendications 1 à 4, caractérisé en ce que les produits de granulation possèdent, jusqu'à plus de 90 %, une dimension granulaire superieure à 120 $\mu$m.